# EUROPEAN PATENT APPLICATION

(11) **EP 4 245 515 A1**
(43) Date of publication of application: **20.09.2023**
(21) Application number: 23162358.8
(22) Date of filing: 16.03.2023
(51) Int. Cl.: B32B 1/02, B32B 7/12, B32B 15/08, B32B 15/088, B32B 15/09, B32B 15/095, B32B 15/20, B32B 27/08, B32B 27/16, B32B 27/18, B32B 27/30, B32B 27/32, B32B 27/34, B32B 27/36, B32B 27/38, B32B 27/40

(54) **PACKAGING MATERIAL**

(30) Priority: 16.03.2022 JP 2022041607; 07.02.2023 JP 2023016587
(71) Applicant: Resonac Packaging Corporation, Hikone-shi, Shiga (JP)
(72) Inventor: KAWAKITA, Keitaro, Shiga (JP)
(74) Representative: Hoffmann Eitle

(57) **Abstract**

**[PROBLEM]** The present invention is to provide a packaging material excellent in moldability, coloring, and strength.

**[MEANS FOR SOLVING PROBLEM]** The present invention is directed to a packaging material which includes a metal foil layer 52 laminated on an inner side of a substrate layer 51, a sealant layer 53 laminated on an inner side of the metal foil layer 52, and a colored adhesive layer 61 provided between the metal foil layer 52 and the substrate layer 51. The colored adhesive layer 61 contains a color pigment. The substrate layer 51 is 2.0% to 5.0% both in the hot water shrinkage in a machine direction (MD) and the hot water shrinkage in a transverse direction (TD), 1.5% or less in the difference between the hot water shrinkage in the MD and the hot water shrinkage in the TD, 1.5 GPa to 3 GPa both in an elastic modulus in the MD and an elastic modulus in the TD, is 320 MPa or more in at least one of breaking strength in the MD and breaking strength in the TD.

## Description

### [TECHNICAL FIELD]

The present invention relates to a packaging material as an exterior packaging material for a battery (power storage device), such as, e.g., a secondary battery for a notebook computer and a mobile phone, or an on-board (mobile) or stationary secondary battery (lithium-ion secondary battery). It also relates to a packaging material or a packaging container for foods or pharmaceuticals, and a power storage device.

### [BACKGROUND ART]

A battery, such as, e.g., a lithium-ion secondary battery, is often required to be colored to unify the appearance and the color of a device, such as, e.g., an electric device to which the battery is mounted. Particularly, in order to impart a profound feeling and a luxury feeling, the device is often made black. In such a case, the battery is also made black.

As a packaging material for this type of device, it is common to use a laminate in which a resin layer is laminated on both sides of a metal foil. When coloring a battery black, etc., the following measures are employed. Examples thereof include a means for coloring a resin layer used in a packaging material, a means for providing a print layer under a substrate layer, a means for coloring an adhesive layer between a substrate layer and a metal layer, and a means for coloring an adhesive layer between layers in a case where a substrate layer is composed of a plurality of layers.

For example, there is a packaging material in which a layer including an identification label is provided as any one of a substrate layer (resin layer), an adhesive layer, and a metal foil layer of a battery packaging material. There also is a packaging material in which a print layer provided on a lower surface side of a substrate layer or an adhesive layer provided on a lower side of a substrate layer is colored to color the entire packaging material (see Patent Documents 1 or 2).

Further, there is a battery packaging material having a black body material layer between a metal foil layer and an outer layer film to promote heat dissipation of the batter packaging material (see Patent Document 3).

### [PRIOR ART DOCUMENT]

### [PATENT DOCUMENT]

**[Patent Document 1]** International Publication WO 2011/016506 A1.
**[Patent Document 2]** Japanese Unexamined Patent Application Publication No. 2011-054563
**[Patent Document 3]** Japanese Unexamined Patent Application Publication No. 2011-096552

### [SUMMARY OF THE INVENTION]

### [PROBLEMS TO BE SOLVED BY THE INVENTION]

Conventionally, in the case of making the above-described packaging material black, it is common to provide a print layer using a printing ink containing a pigment, such as, e.g., a carbon black.

However, in a case where a print layer containing a carbon black as a pigment is provided on the inner surface of the outer resin layer constituting a battery packaging material to make the battery black, there are the following problems.

That is, when molding the black packaging material into a molded container (molded casing) as a molded product by deep drawing or stretch forming, there are problems that the print layer containing a carbon black is partially broken and peeled off, resulting in exposure of the underlayer (which is not black) to be visually recognized, which impairs the uniform black coloring.

Such partial peeling of the print layer occurs when sealing a black packaging material after encapsulating an electrode or an electrolyte, or when using a battery packaged with a black packaging material under severe environments, such as, e.g., a high-temperature and high-humidity environment.

Further, not only a black packaging material colored with a carbon black but also a packaging material colored with other pigments have similar problems, and it was difficult to obtain good coloring.

On the other hand, in recent years, a battery, such as, e.g., a lithium-ion secondary battery, has become higher in capacity, and a packaging material as a battery packaging material has been required to have characteristics, such as, e.g., better moldability, higher heat resistance, and higher moisture resistance. In a heat-resistant resin layer (substrate layer) provided on an outer surface side of a battery packaging material, it is also desired to efficiently disperse the external force at the time of molding and maintain adequate strength.

The present invention has been made in view of the above-described problems, and an object of the present invention is to provide a packaging material excellent in moldability, coloring, and strength, and a packaging container, a packaging material for a power storage device, and a power storage device using the packaging material.

### [MEANS FOR SOLVING THE PROBLEMS]

In order to solve the above-described problems, the present invention includes the following means.
[1] A packaging material comprising:
   a substrate layer made of a heat-resistant resin;
   a metal foil layer laminated on an inner side of the substrate layer;
   a sealant layer made of a thermoplastic resin, the sealant layer being laminated on an inner side of the metal foil layer; and
   a colored adhesive layer provided between the metal foil layer and the substrate layer,
   wherein the colored adhesive layer contains a color pigment,
   wherein the substrate layer is 2.0% to 5.0% both in hot water shrinkage in a machine direction (MD) and in hot water shrinkage in a transverse direction (TD) perpendicular to the machine direction,
   wherein the substrate layer is 1.5% or less in a difference between the hot water shrinkage in the machine direction (MD) and the hot water shrinkage in the transverse direction (TD),
   wherein the substrate layer is 1.5 GPa to 3 GPa both in an elastic modulus in the machine direction (MD) and in an elastic modulus in the transverse direction (TD), and
   wherein the substrate layer is 320 MPa or more in at least one of breaking strength in the machine direction (MD) and breaking strength in the transverse direction (TD).
[2] The packaging material as recited in the above-described Items [1],
   wherein the colored adhesive layer is made of a colored adhesive composition containing the color pigment and an adhesive,
   wherein the colored adhesive composition contains the color pigment of 2 mass% or more and less than 5 mass% with respect to a solid component, and
   wherein the colored adhesive layer is a coating made of the colored adhesive composition of 5 g/m² to 10 g/m².
[3] The packaging material as recited in the above-described Item [1] or [2],
   wherein the colored adhesive layer contains a two-part curing type polyester urethane resin composed of a polyester resin as a main agent and a polyfunctional isocyanate compound as a curing agent,
   wherein the polyester resin as the main agent is 8,000 to 25,000 in a number average molecular weight (Mn), 15,000 to 50,000 in a weight average molecular weight (Mw), and 1.3 to 2.5 in a ratio (Mw/Mn) thereof,
   wherein the polyfunctional isocyanate compound as the curing agent contains 50 mole % or more of aromatic isocyanate, and
   wherein the substrate layer is configured by a polyamide film having a number average molecular weight of 15,000 to 30,000.
[4] The packaging material as recited in the above-described Item [3],
   wherein in the two-part curing type polyester urethane resin, the polyester resin as the main agent is made of dicarboxylic acid and dialcohol as raw materials, and
   wherein the dicarboxylic acid contains aliphatic dicarboxylic acid and aromatic dicarboxylic acid having an even methylene chain number, and a content rate of the aromatic dicarboxylic acid to a total amount thereof is 40 mole% to 80 mole%.
[5] The packaging material as recited in the above-described Item [3] or [4],
   wherein a cured film of the two-part curing type polyester urethane resin is 70 MPa to 400 MPa in a Young's modulus by a tensile test according to JIS K7162.
[6] The packaging material as recited in any one of the above-described Items [1] to [5],
   wherein the metal foil layer has a chemical conversion coating film on at least one surface thereof.
[7] The packaging material as recited in any one of the above-described Items [1] to [6], further comprising:
   a matte coat layer provided on an outer surface of the substrate layer.
[8] A packaging container provided with a molded portion formed by deep-drawing or stretch-forming the packaging material as recited in any one of the above-described Items [1] to [7].
[9] A power storage device packaging material constituted by the packaging material as recited in any one of the above-described Items [1] to [7] and the packaging container as recited in the above-described Item [8].
[10] A power storage device comprising:
   a power storage device main body; and
   the packaging material as recited in the above-described Item [9],
   wherein the power storage device main body is packaged with the packaging material.

### [EFFECTS OF THE INVENTION]

According to the packaging material of the above-described Invention [1], since the colored adhesive layer contains a pigment, good coloring can be obtained. Further, since the hot water shrinkage between the TD and the MD of the substrate layer, the elastic modulus, and the breaking strength are specified to fall within the predetermined ranges, the action from the the external pressure can be efficiently dispersed. Accordingly, adequate strength and excellent moldability can be attained. Therefore, it is possible to perform, for example, short and deep molding, which makes it possible to prevent defects, such as, e.g., partial cracking and peeling of the colored adhesive layer during molding and sealing or even during the use in a hot and humid severe environment.

According to the packaging material of the above-described invention [2], the application quantity of the colored adhesive composition as a colored adhesive layer and the concentration (content rate) of the color pigment in the colored adhesive composition are specified to fall within predetermined ranges. Therefore, it is possible to obtain an entirely uniform coloring property. Furthermore, it is possible to prevent the embrittlement of a colored adhesive layer caused by the inclusion of the color pigment and to sufficiently maintain the adhesion between the substrate layer and the metal foil layer. Therefore, good moldability can be obtained when performing deep drawing and/or stretch forming. Moreover, even if it is left in a high-temperature high-humidity environment after molding, the substrate layer will not be peeled off to impair its appearance. Consequently, in an evaluation test affected by the inclusion of the color pigment, especially in a warm water submersion test which is the most severe environmental test, the substrate layer is not peeled off, which in turn can further improve the adhesiveness of the substrate layer.

According to the packaging material of the above-described invention [3], the colored adhesive layer contains a particular two-part curing type polyester urethane resin. Therefore, moderate strength, elongation, and excellent heat resistance can be obtained. Further, the polyester resin, which is a main agent of the colored adhesive layer, is adjusted to a predetermined molecular weight distribution. Therefore, it is excellent in adhesive coating suitability. In addition, since the polyamide film as a substrate layer is adjusted to a predetermined molecular weight distribution, the film as a substrate layer is less likely to brake, and excellent piercing resistance can be obtained.

According to the packaging material of the above-described invention [4], in the two-part curing type polyester urethane resin contained in the colored adhesive layer, the polyester resin as a main agent is composed of a particular composition. Therefore, it is possible to further improve the adhesive properties and to more assuredly prevent the peeling between the substrate layer and the metal foil layer.

According to the packaging material of the above-described invention [5], the Young's modulus in the cured film of the two-part curing type polyester urethane resin contained in the colored adhesive layer is adjusted. Therefore, moderate flexibility and coating film strength can be maintained, which more assuredly prevents the peeling between the substrate layer and the metal foil layer.

According to the packaging material of the above-described invention [6], the chemical conversion coating film is provided on the surface of the metal foil layer. Therefore, the metal foil layer can be prevented from being corroded, and the corrosion resistance of the entire packaging material can be improved.

According to the packaging material of the above-described invention [7], since the matte coat layer is provided on the surface of the substrate layer, the formability and durability can be further improved. In addition, the presence of the matte coat layer can improve the appearance quality of the packaging material, prevent problems such as the adhesion between packaging materials, and facilitate the handling of packaged products.

According to the packaging container of the above-described invention [8], since it utilizes the packaging material of the invention, the same advantages as those described above can be obtained.

According to the power storage device packaging material of the above-described invention [9], since it utilizes the packaging material and the packaging container of the above-described invention, the same advantages as those described above can be obtained.

According to the power storage device of the above-described invention [10], since it utilizes the packaging material of the above-described invention, the same advantages as those described above can be obtained.

### [BRIEF DESCRIPTION OF THE DRAWINGS]

**[****FIG. 1]** FIG. 1 is a cross-sectional side view showing a power storage device according to one embodiment of the present intention.
**[****Fig. 2]** FIG. 2 is an exploded perspective view showing the power storage device according to the embodiment.
**[****Fig. 3]** FIG. 3 is a schematic cross-sectional view schematically showing the power storage device packaging material according to the embodiment.
**[****FIG.4]** FIG. 4 is a schematic diagram for describing an MD and a TD in a resin film.
**[****FIG. 5]** FIG. 5 is an S-S curve diagram of a cured film of a two-part curing type polyester urethane resin adhesive.
**[****FIG. 6]** FIG. 6 is a perspective view showing a molded article of a packaging material sample used in Examples of the invention.

### [EMBODIMENTS FOR CARRYING OUT THE INVENTION]

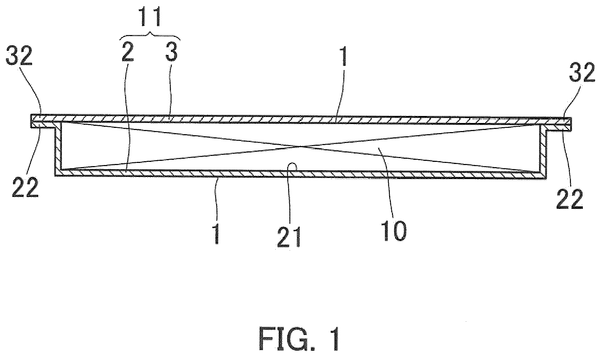

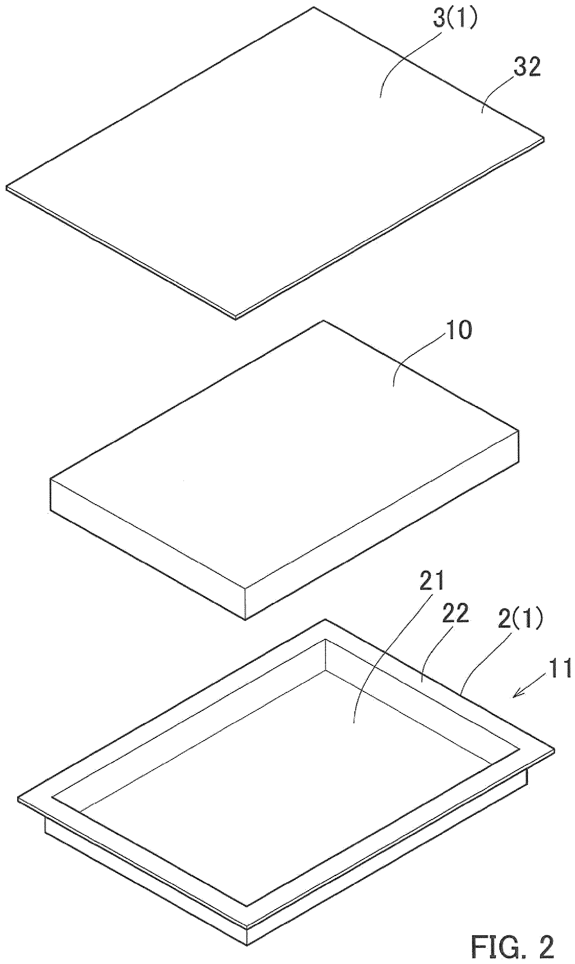

FIG. 1 is a cross-sectional side view showing a power storage device according to one embodiment of the present invention. FIG. 2 is an exploded perspective view showing a power storage device according to one embodiment of the present invention.

As shown in both figures, the power storage device of this embodiment is provided with a casing 11 and a power storage device main body 10, such as, e.g., an electrochemical element to be housed in the casing 11.

The casing 11 is constituted by a tray member (packaging container) 2 having a rectangular shape in plan view, the tray member being formed by an exterior material (packaging material) 1, and a cover member 3 having a flat shape in plan view, the cover member being formed by the exterior material (packaging material) 1.

The tray member 2 is formed of a molded article obtained by molding a packaging material 1 using a method, such as, e.g., deep drawing. In the tray member 2, the entire intermediate area excluding the outer peripheral edge portion is recessed downward, and a recessed portion 21 having a rectangular shape in plan view is formed. Further, an outwardly protruding flange portion 22 is integrally formed on the outer periphery of the opening edge portion of the recessed portion 21.

Further, the cover member 3 is constituted by a packaging material 1 formed in a sheet-like shape. In the cover member 3, the outer peripheral edge portion is configured as a flange portion 32 corresponding to the flange portion 22 of the tray member 2.

The packaging material 1 as the tray member 2 and the cover member 3 is constituted by an outer packaging laminate, which is a laminate sheet or film with softness and flexibility.

The power storage device main body 10 is not particularly limited, and the examples thereof include a battery main body, a capacitor main body, and a condenser main body. The power storage device main body 10 is formed into a shape corresponding to the recessed portion 21 of the tray member 2.

The cover member 3 is arranged on the tray member 2 to cover the recessed portion 21 in a state in which the power storage device main body 10 is accommodated in the recessed portion 21. In this state, the flange portion 22 of the tray member 2 and the flange portion 32 of the cover member 3 are thermally fused to each other. With this, the power storage device of this embodiment is formed.

Although not shown, one end (inner end) of a tab lead is connected to the power storage device main body 10, and the other end (outer end) is drawn out of the power storage device. Electric power can be input to and output from the power storage device main body 10 via the tab-lead.

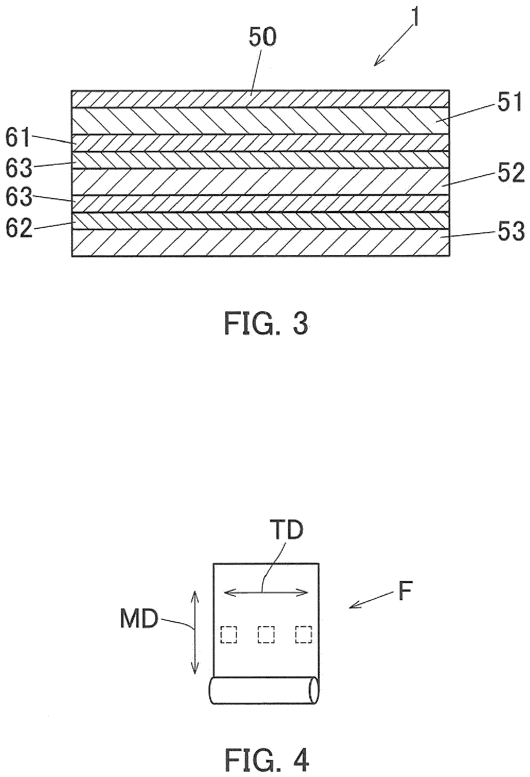

FIG. 3 is a schematic cross-sectional view schematically showing the basic structure of the outer packaging laminate material constituting the packaging material 1 in this embodiment. As shown in the figure, the packaging material (laminate material) 1 used in this embodiment is provided with a substrate layer (heat-resistant resin layer) 51, a metal foil layer (barrier layer) 52, and a sealant layer (heat-fusible resin layer) 53. The metal foil layer (barrier layer) 52 is bonded to one surface (inner surface) of the substrate layer 51 via a first adhesive layer 61 as a colored adhesive layer or an outer side adhesive layer. The sealant layer (heat-fusible resin layer) 53 is bonded to one surface (inner surface) of the metal foil layer 52 via a second adhesive layer 62 as an inner adhesive layer. Note that a chemical conversion coating 63 is formed on both surfaces of the metal foil layer 52, and a matte coat layer 50 is laminated on the outer surface of the substrate layer 51.

In this embodiment, the substrate layer 51 is formed of, for example, a polyamide film, a polyester film, or a stretched film thereof. Among them, in terms of formability and strength, it is preferable to use a biaxially stretched polyamide film, a biaxially stretched polybutylene terephthalate (PBT) film, a biaxially stretched polyethylene terephthalate (PET) film, or a biaxially stretched polyethylene naphthalate (PEN) film.

Examples of the polyamide film include a 6 nylon film, a 6,6 nylon film, and an MXD nylon film.

The substrate layer 51 may be a single-layer structure or a multi-layer structure. In the case of forming a multi-layer structure, the multi-layer structure composed of a PET film/a polyamide film can be exemplified.

On the lower surface of the stretched film used as the substrate layer 51, that is, on the bonding surface with the first adhesive layer 61, it is desirable to subject the surface to an easy adhesion treatment to impart wettability for the purpose of improving the adhesive strength with the adhesive layer 61.

Various proposals have been made for the easy adhesion treatment, and the following treatment can be exemplified.

At least one surface of the stretched film as the substrate layer 51 is oxidized by a corona treatment, a plasma treatment, a flame plasma treatment, electron beam irradiation, UV irradiation, or the like, to thereby improve the wettability.

Further, there is also a method of imparting the wettability by forming an easy adhesion treatment agent layer mentioned below. For example, the easy adhesion treatment agent layer can be formed by applying a water-based emulsion (aqueous emulsion) of one or a plurality of types of resins selected from the group consisting of an epoxy resin, a urethane resin, an acrylic ester resin, a methacrylic ester resin, and a polyethyleneimine resin, on a surface of a stretched film for a substrate layer, and drying it. The application quantity (formation amount) is preferably about 0.01 g/m² to about 0.5 g/m² in a solid component.

The coating method is not specifically limited but can be exemplified by a spray coating method, a gravure roll coating method, a reverse roll coating method, and a lip coating method.

In view of the requests for higher capacity and higher security of a power storage device (battery), higher moldability and higher piercing resistance are desired for the substrate layer 51 of a power storage packaging material. Studies by the inventor have found the fact that in order to improve the latter performance (i.e., the piercing resistance), a polyamide film is more suitably used than a polyester film. More preferably, a polyamide film satisfying the following physical properties (1) to (5) can be used. As a result, good formability and piercing resistance can be obtained.
(1) In the substrate layer 51, it is required to adjust both the hot water shrinkage in the TD and the hot water shrinkage in the MD to 2.0% to 5.0%, preferably 2.5% to 4.5%.

As shown in FIG. 4, the term "MD" denotes the machine direction (the resin flow direction) of the resin film F, and the term "TD" denotes a transverse direction, i.e., a direction perpendicular to the machine direction. Further, the hot water shrinkage denotes a dimensional change rate in a shrinkage direction (stretching direction) before and after the immersion of a film (measurement target) in hot water at 100°C for 5 minutes. For example, when the dimension in the shrinkage direction (MD or TD) before the hot water immersion is "X," and the dimension in the shrinkage direction (MD or TD) after the hot water immersion is "Y," the hot water shrinkage (%) in the shrinkage direction (MD or TD) is determined by a relational expression of {(X-Y)/X} × 100. Note that in the present invention, it is preferable to adopt an average value (average hot water shrinkage) of the hot water shrinkage as the "hot water shrinkage" indicating a characteristic value of a polyamide film. In the present invention, the average hot water shrinkage denotes an average value of hot water shrinkages at three points of hot water shrinkages, i.e., two points on both ends of hot water shrinkages and one point at the center point of a hot water shrinkage, with respect to one direction of the sheet (film) to be measured. However, depending on the size of the power storage device main body 10 in the present invention, it is possible to adopt a hot water shrinkage measured at a certain portion (contraction rate after the hydrothermal treatment at a reference position), which is not an average value, as the "hot water shrinkage" indicating the characteristic value of the polyamide film.

(2) It is necessary to adjust the difference between the hot water shrinkage of the substrate layer 51 in the MD and the hot water shrinkage in the TD to 1.5% or less. Preferably, it is adjusted to 1.2% or less. Specifically, when the average hot water shrinkage in the MD is "MDz" and the average hot water shrinkage in the TD is "TDz," it is required to establish the relational expression of |MDz-TDz| ≦ 1.5%. Preferably, it is set to |MDz-TDz| ≦ 1.2%.

(3) It is necessary to adjust the elastic modulus of the substrate layer 51 in the MD and the elastic modulus thereof in the TD to 1.5 GPa to 3 GPa. Preferably, it is adjusted to 2.0 GPa to 2.5 GPa.

(4) It is required to adjust at least one of the breaking strength of the substrate layer 51 in the TD and the breaking strength thereof in the MD to be equal to or higher than 320 MPa. Preferably, it is adjusted to be equal to or lower than 400 MPa.

(5) The number average molecular weight of the nylon as the amide film constituting the substrate layer 51 is preferably adjusted to 15,000 to 30,000, more preferably 20,000 to 25,000.

Here, since the hot water shrinkages in the TD and in the MD in this embodiment are 2.0% or more, appropriate flexibility can be provided, and good moldability can be secured as the substrate layer 51. Further, since the hot water shrinkage is 5.0% or less, as the substrate layer 51, excessive flexibility can be avoided, and desired strength can be maintained.

Furthermore, in this embodiment, since the difference between the hot water shrinkage in the TD and the hot water shrinkage in the MD is adjusted to fall within the above-described specified range, it is possible to efficiently disperse the force from the external pressure, which makes it possible to assuredly maintain desired strength as the substrate layer 51.

Further, since the elastic modulus in the TD and the elastic modulus in the MD are adjusted to fall within the above-described specified ranges, it is possible to more assuredly maintain moderate flexibility and strength as the substrate layer 51.

Further, since the breaking strength in the TD and the breaking strength in the MD are adjusted to fall within the above-described specified range, it is possible to more assuredly obtain desired strength as the substrate layer 51.

By adopting a polyamide film having the above-described properties for the substrate layer 51 as described above, it is possible to obtain a packaging material 1 having good formability and excellent piercing resistance.

In a case where the number average molecular weight of nylon as the substrate layer 51 is 15,000 or more, the substrate layer 51 is less likely to break. In a case where the molecular weight is 30,000 or less, the flexibility of the substrate layer 51 can be maintained, which is less likely to crack.

Further, in this embodiment, the relative viscosity of the polyamide film as the substrate layer 51 is preferably adjusted to 2.9 to 3.1. That is, in a case where the relative viscosity is adjusted to fall within the above-described particular range, the strength and flexibility can be more effectively given as the substrate layer 51. Therefore, a packaging material 1 having good formability and high piercing resistance can be assuredly obtained.

In this embodiment, the piercing strength of the packaging material 1 is preferably within the range of 22 N to 30 N, more preferably 24 N to 30 N, and even more preferably 26 N to 30 N.

In this embodiment, the thickness of the polyamide film as the substrate layer 51 is preferably adjusted to 9 um to 50 um, more preferably to 12 um to 30 µm.

Here, the distribution of the hot water shrinkage in the polyamide film of this embodiment will be described. First, in a square polyamide film, it is assumed that the hot water shrinkages at three points, i.e., the two points on both sides in the longitudinal direction (MD) and one point at the center line, are fixed point hot water shrinkages as three points in the MD. Further, it is assumed that the hot water shrinkages at three points, i.e., two points at both sides and one point at the center line in the transverse direction (TD) are defined as the fixed point hot water shrinkages at three points in the TD. In this case, it is preferable to use a film in which the difference between the largest fixed point hot water shrinkage and the smallest fixed point hot water shrinkage, among a total of six fixed point hot water shrinkages, i.e., three fixed point hot water shrinkages in the MD and three fixed point hot water shrinkages in the TD, is adjusted to 2.5 or less.

Note that the average value of the three fixed-point hot water shrinkages in the MD corresponds to the average hot water shrinkage in the MD, and the average value of the three hot water shrinkages in the TD corresponds to the average hot water shrinkage in the TD.

Here, the three regions indicated by the broken lines in FIG. 4 are all square regions of the same size in the polyamide film (substrate layer 51). In a case where the square regions satisfy the above-described distribution conditions of the hot water shrinkage, the deviation of flexibility is suppressed over the entire region of the substrate layer 51. For this reason, even if external stress is applied, the external stress is dispersed to the entirety of the substrate layer 51, resulting in hard-to-be-broken, which in turn can assuredly improve the strength.

In this embodiment, the substrate layer 51 is formed of a polyamide film, but other layers may be laminated on the substrate layer 51 as described above.

In the substrate layer 51, a resin having a melting point higher by 10°C or more, preferably 20°C or more, than that of all resins constituting the sealant layer 53 is preferably employed. That is, in a case where this configuration is adopted, it is possible to avoid the adverse effect of heat on the substrate layer 51 when thermally fusing the sealant layer 53.

In this embodiment, the first adhesive layer (colored adhesive layer) 61 is a layer that is responsible for bonding the metal foil layer 52 and the substrate layer 51 and imparts a color (including an achromatic color) to the outer surface of the packaging material 1. The first adhesive layer (colored adhesive layer) 61 is constituted by a colored adhesive composition containing a color pigment and a particular adhesive (adhesive components).

As the color pigment, an azo-based pigment, a phthalocyanine-based pigment, a condensed polycyclic pigment, an inorganic-based pigment, or the like can be suitably used. Further, as the black pigment, a carbon black can be recommended.

As the color pigment, it is preferably to use a color pigment having an average particle diameter of 0.1 um to 5 um. The particularly preferable average particle diameter is 0.5 um to 2.5 µm.

When dispersing the pigment, it is preferable to disperse the pigment by using a pigment disperser. When dispersing the pigment, it is also possible to use a pigment dispersant, such as, e.g., a surfactant.

The adhesive components of the first adhesive layer 61 are configured by an adhesive containing a two-part curing type polyester urethane resin composed of a polyester resin as a main agent and a polyfunctional isocyanate compound as a curing agent. In the present invention, the molecular weight of the polyester resin, which is a main agent of the two-part curing type polyester urethane resin, is defined, and the type of the polyfunctional isocyanate compound, which is a curing agent, is defined. With this, the adhesive strength and the moldability can be enhanced, which can suppress the delamination in the case of performing deep forming when molding the packaging material 1.

The above-described polyester resin as a main agent is a copolymer composed of dicarboxylic acid and dialcohol as raw materials, and the preferred materials and compositions are as follows.

It is preferable to use both aliphatic dicarboxylic acid and aromatic dicarboxylic acid as the dicarboxylic acid. The odd or even of the methylene number of the methylene chain of the aliphatic dicarboxylic acid is a factor affecting the crystal property of the resin. The dicarboxylic acid with an even number of methylene produces a hard resin having a high crystal property. Therefore, it is preferable to use aliphatic dicarboxylic acid with an even number of methylene. As the aliphatic dicarboxylic acid with an even number of methylene, succinic acid (methylene number is 2), adipic acid (methylene number is 4), suberic acid (methylene number is 6), and sebacic acid (methylene number is 8) can be exemplified.

As the aromatic dicarboxylic acid, isophthalic acid, terephthalic acid, naphthalenedicarboxylic acid, and phthalic anhydride can be exemplified.

The content rate of the aromatic dicarboxylic acid to the total amount of aliphatic dicarboxylic acid and aromatic dicarboxylic acid is set to 40 mole% to 80 mole%. In other words, the content rate of the aliphatic dicarboxylic acid is limited to the range of 20 mole% to 60 mole%. With this, a resin high in adhesive strength and excellent in moldability can be produced, which in turn makes it possible to produce a molded article with a high sidewall and provide an outer material (packaging material) 1 capable of suppressing the delamination between the metal foil layer 52 and the substrate layer 51.

Here, when the content rate of the aromatic dicarboxylic acid is less than 40 mole%, the membrane property deteriorates, resulting in easy occurrence of cohesive peeling. This may cause the occurrence of interlayer separation.

On the other hand, when the content rate of the aromatic dicarboxylic acid exceeds 80 mole%, the resin hardens, which tends to cause deterioration of the adhesive performance. The particularly preferred content rate of the aromatic dicarboxylic acid is 50 mole% to 70 mole%.

As the dialcohol in the polyester resin as a main agent of the adhesive components, ethylene glycol, propylene glycol, 1,3 butanediol, 1,4-butanediol, diethylene glycol, dipropylene glycol, neopentyl glycol, 1,5-pentanediol, 1,6-hexanediol, octanediol, 1,4-cyclohexanediol, and 2-butyl-2-ethyl-1,3-propanediol, can be exemplified.

In the molecular weight of the polyester resin, it is preferable that the number average molecular weight (Mn) be set to 8,000 to 25,000, the weight average molecular weight (Mw) be set to 15,000 to 50,000, and the ratio (Mw/Mn) thereof be set to 1.3 to 2.5. When the number average molecular weight (Mn) is equal to or greater than 8,000, and the weight average molecular weight (Mw) is equal to or greater than 15,000, adequate coating film strength and heat resistance can be obtained. When the number average molecular weight (Mn) is 25,000 or less, and the weight average molecular weight (Mw) is 50,000 or less, appropriate coating film elongation can be obtained without becoming too hard.

When the ratio (Mw/Mn) is 1.3 to 2.5, the molecular weight distribution becomes suitable, which can maintain a balance between the adhesive coating suitability (wide distribution) and performance (narrow distribution).

In the above-described polyester resin, the particularly preferred number average molecular weight (Mn) is 10,000 to 23,000, the particularly preferred weight average molecular weight (Mw) is 20,000 to 40,000, and the particularly preferred (Mw/Mn) is 1.5 to 2.3.

Further, the molecular weight of the above-described polyester resin can be adjusted by changing the chain with isocyanate that is multifunctional. That is, when polyester components in a main agent are linked by NCO, a hydroxyl group polymer is formed at the end, and the molecular weight of the polyester resin can be adjusted by adjusting the equivalent ratio between the isocyanate group and the hydroxyl group of polyester. In the present invention, it is preferable to use a polyester resin connected such that the equivalent ratio (OH/NCO) is in the range of 1.01 to 10. As other methods for adjusting the molecular weight, changing the reaction conditions (adjusting the compounding molar ratio of dicarboxylic acid and dialcohol) of the polycondensation reaction of dicarboxylic acid and dialcohol can be exemplified.

Further, in this embodiment, an epoxy-based resin or an acryl-based resin may be added as an additive to the main agent in the adhesive components.

As the polyfunctional isocyanate compound which is a curing agent of adhesive components, various isocyanate compounds of an aromatic system, an aliphatic system, and an alicyclic system can be used. Specifically, a multifunctional isocyanate modified product composed of one or two or more types of diisocyanates, such as, e.g., aliphatic isocyanate of hexamethylene diisocyanate (HDI), isophorone diisocyanate (IPDI), aromatic isocyanate of tolylene diisocyanate (TDI), and diphenylmethane diisocyanate (MDI), can be exemplified.

As the modifying means, in addition to an adduct with multifunctional active hydrogens compound, such as, e.g., water, glycerol, and trimethylolpropane, multifunctional isocyanate modified product by a multimerization reaction, such as, e.g., isocyanurate, carbodiimidization, and polymerization, can be exemplified. Among these, one or two or more types thereof may be mixed and used. However, in order to increase the adhesive strength after curing and obtain a peel-preventing effect of the substrate layer 51, it is preferable to contain an aromatic isocyanate compound in the amount of 50 mole% or more. The more preferable content rate of the aromatic isocyanate compound is 70 mole% or more.

In the two-part curing type polyester urethane resin of the adhesive components, the blending ratio of the main agent and the curing agent is preferable such that 2 to 25 moles of an isocyanate functional group (-NCO) are blended to 1 mole of a polyol hydroxyl group (-OH). When the molar ratio (-NCO)/(-OH) becomes less than 2, which is low in the isocyanate functional group (-NCO), adequate coating film strength and heat resistance may not be obtained due to insufficient curing reaction. On the other hand, when the (-NCO)/ (-OH) exceeds 25, and the isocyanate functional group (-NCO) increases, the reaction with the functional group other than a polyol may be excessively advanced, and the coating film may become too hard, resulting in an inadequate elongation. The particularly preferred molar ratio (-NCO)/(-OH) of the polyol hydroxyl group and isocyanate functional group is 5 to 20.

In the two-part curing type polyester urethane resin, it is preferable that the cured film after reaction have the following physical properties.

In the cured film, it is preferable that the Young's modulus by a tensile test (JIS K7162) is 70 MPa to 400 MPa in order to ensure good moldability of the sealing packaging material and bonding strength between layers. A particularly preferred Young's modulus is 100 MPa to 300 MPa.

It is preferable that the breaking strength be 20 MPa to 70 MPa and the breaking elongation be between 50% and 400%. The particularly preferred breaking strength is 30 MPa to 50 MPa, and the particularly preferred breaking elongation is 100% to 300%.

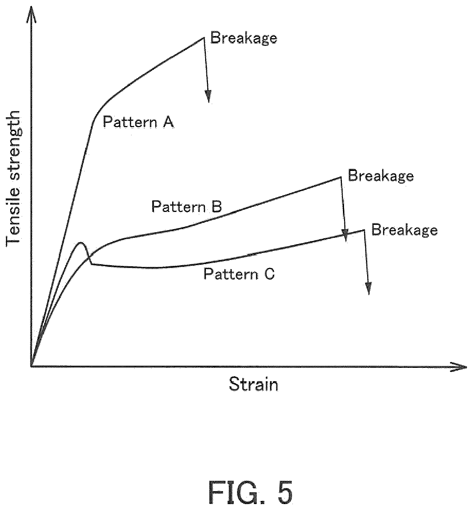

Furthermore, it is preferable that the tensile stress-strain curve (S-S curve) do not exhibit a strength decrease before breaking. FIG. 5 shows three patterns of S-S curves. The pattern A is small in the strain amount with respect to the tensile stress, and the pattern B is large in the strain amount with respect to the tensile stress. But, in both the pattern A and the pattern B, the strain amount increases as the tensile stress increases, and therefore, no decrease in strength before breakage is observed. On the other hand, in the pattern C, the tensile stress decreases in the process of increasing the strain amount, which shows a decrease in strength prior to the breaking. In the present invention, it is preferable that the cured film of the two-part curing type adhesive agent do not reduce in strength in the S-S curve. More preferably, it is preferable that the S-S curve have no bending point at which the strength rapidly changes.

The adhesive containing the above-described two-part curing type polyester urethane resin is adjusted as follows. That is, dicarboxylic acid and dialcohol, which are raw materials of a polyester resin, are condensed and polymerized. If required, it is further chain-extended with isocyanate, which is multifunctional. To this, various additives, such as, e.g., a solvent and a urethan reaction catalyst, a coupling agent for improving adhesive strength, an epoxy resin, an antifoaming agent, a leveling agent, a UV absorber, and an antioxidant are mixed to form a fluidized polyester resin solution. To this, a polyfunctional isocyanate compound or a solvent, which is a curing agent, is blended to form a low-viscosity fluid.

The preferable conditions (1) and (2) of the components in the above-described colored adhesive composition constituting the first adhesive layer 61 are as follows. Note that the content rate described below denotes a ratio of a solid component that does not contain a solvent.
(1) A preferred content rate of the color pigment to a total amount of the color pigment and the polyester resin (the main agent of the two-part curing type polyester urethane resin) is 2 mass% or more and less than 5 mass%.
(2) The application quantity of the colored adhesive composition as the first adhesive layer 61 is 5 g/m² to 10 g/m².

Based on the above-described conditions (1) and (2), the content of the color pigment contained in the first adhesive layer 61 is 0.1 g/m² or more and less than 0.5 g/m². However, when the content of the color pigment is less than 0.25 g/m², the shielding effect and the visual effect are insufficient, which may be problematic in terms of design. Therefore, it is not preferable. Further, when the content of the color pigment exceeds 0.45 g/m², the improvement in visual effectiveness is almost eliminated, and rather, peeling in a hot water submersion test, which will be described later, may easily occur. Therefore, a valid content range of the color pigment contained in the first adhesive layer 61 of the present invention is in a range of 0.25 g/m² to 0.45 g/m², and a more preferable content of the color pigment is in a range of 0.25 g/m² to 0.35 g/m².

The above-described content rate (density) range of the color pigment is an essential condition in a case where a 45°C hot water submersion test is performed as the most stringent environmental test after molding the battery packaging material. When the content of the color pigment exceeds 0.45 g/m², the first adhesive layer 61 becomes hard and brittle, decreasing the adhesive strength to the metal foil layer 52, which may cause the peeling of the substrate layer (heat-resistant resin layer) 51 in a hot water submersion test.

However, in a typical environmental test (high-temperature high-humidity storage test of 70°C × 90%RH) after molding a battery packaging material, in a case where the content of the color pigment is less than 0.5 g/m², no peeling of the substrate layer (heat-resistant resin layer) 51 occurs during the storage test and can be used.

In a case where the content of the color pigment is 0.5 g/m² or more, the possibility of peeling of the substrate layer 51 is increased during a high-temperature high-humidity storage test.

In a case where the application quantity of the first adhesive layer (colored adhesive composition) 61 is less than 5g/m², the content of the color pigment is reduced, and therefore, the effectiveness of concealing the metal foil layer is reduced as described above, and metallic luster is visually recognized, which may impair the profundity.

Further, in a case where the application quantity of the first adhesive layer 61 exceeds 10 g/m², the moldability is significantly deteriorated, leading to an increase in cost. A preferred application quantity of the colored adhesive composition is 6 g/m² to 10 g/m².

As described above, the physical properties of the adhesive components of the first adhesive layer 61 is 70 MPa to 400 MPa in the Young's modulus by a tensile test of a cured film after reacting. When the color pigment is contained in the amount of 2 mass% or more and less than 5 mass% relative to the adhesive components, the elastic modulus of the adhesive coating film containing the color pigment falls within the range of 450 MPa to 650 MPa.

As mentioned above, the hot water shrinkage of the substrate layer 51 is 2.0% to 5.0% both in the TD and in the MD.

In a case where the elastic modulus of the adhesive coating film containing the color pigment is 450 MPa to 650 MPa with respect to the hot water shrinkage of 2.0% to 5.0% of the substrate layer 51, it can follow the thermal shrinkage (shrinkage rate) of the substrate layer 51 in high temperature or high-temperature and high-humidity environment after molding. Therefore, the delamination between the substrate layer 51 and the first adhesive layer 61 can be suppressed.

The colored adhesive composition is prepared by blending the adhesive (containing a solvent and various additives) containing a color pigment and the two-part curing type polyester urethane resin prepared by the above-described method at a predetermined ratio.

The method of bonding the metal foil layer 52 and the substrate layer 51 is not limited, but a method called "dry lamination" can be recommended. Specifically, the above-described colored adhesive composition is applied to the upper surface (outer surface) of the metal foil layer 52, or the lower surface (inner surface) of the base material layer 51, or both of these surfaces, the solvent is caused to be evaporated to form a dry film, and then the metal foil layer 52 and the base material layer 51 are bonded to each other. Thereafter, the two-part curing type polyester urethane resin is further cured according to the curing conditions thereof. With this, the metal foil layer 52 and the substrate layer 51 are bonded to each other via the first adhesive layer 61. Note that the coating method of the colored adhesive composition can be exemplified by a gravure coating method, a reverse roll coating method, a ripple role coating method, and the like.

In this embodiment, the metal foil layer 52 plays a role of a gas barrier property for preventing the invasion of oxygen and moisture.

As the metal foil layer 52, an aluminum foil, a copper foil, and a stainless-steel foil can be exemplified, and an aluminum foil is generally used.

As the metal foil layer 52, an aluminum foil can be suitably used. Particularly, an Al-Fe-based alloy foil containing 0.7 mass% to 1.7 mass% of Fe is preferred because it has excellent strength and ductility and can obtain good moldability.

The thickness of the metal foil layer 52 is preferably set to 20 um to 100 µm, more preferably 25 um to 60 um. That is, when the thickness is 20 um or more, it is possible to prevent pinhole generation during rolling when producing a metal foil. Further, when the thickness is 100 um or less, stress at the time of stretch forming or drawing can be reduced, and moldability can be improved.

In the exterior material (packaging material) of the present invention, by forming a chemical conversion coating film 63 having a higher corrosion resistance on the surface of the metal foil layer 52, the corrosion resistance in the metal foil layer 52 can be improved. Such chemical conversion treatment can sufficiently prevent the metal foil surface from being corroded by the contents (electrolyte, etc., of a battery).

Examples of the chemical conversion treatment include a chromate treatment and a non-chromium chemical conversion treatment using a zirconium compound.

For example, in the case of a chromate treatment, an aqueous solution of a mixture of any one of the following mixtures 1) to 3) is applied to the surface of the metal foil subjected to a degreasing treatment, and then drying is performed.
1) a mixture of phosphoric acid, chromic acid, and at least one of metal salt of fluoride and non-metal salt of fluoride
2) a mixture of phosphoric acid, any one of an acryl-based resin, a chitosan derivative resin, and a phenol-based resin, and at least one of chromic acid and chromium (III) salt.
3) a mixture of phosphoric acid, any one of an acryl-based resin, a chitosan derivative resin, and a phenol-based resin, at least one of chromic acid and a chromium (III) salt, and at least one of a non-metal salt of fluoride and a metal salt of fluoride.

The chromium adhesion amount of the chemical conversion coating film 63 is preferably set to 0.1 mg/m² to 50 mg/m², more preferably to 2 mg/m² to 20 mg/m².

Note that the chemical conversion coating film 63 may be applied to either one of the surfaces of the metal foil layer 52.

The sealant layer (heat-fusible resin layer, thermoplastic resin layer) 53 has a role of providing excellent chemical resistance against a strong corrosiveness electrolyte used in a lithium-ion secondary battery or the like, and also providing heat sealing property to the packaging material 1.

The sealant layer 53 is preferably a heat-fusible resin non-stretched film layer. The heat-fusible resin non-stretched film is preferably formed of a non-stretched film made of at least one type of heat-fusible resin selected from the group consisting of polyethylene, polypropylene, an olefin-based copolymer, and an acid-modified product and ionomers thereof, from the view point of the chemical resistance and the heat-sealing property.

The thickness of the sealant layer 53 is preferably set to 20 um to 80 um, more preferably 25 um to 50 um. That is, the generation of pinholes can be sufficiently prevented by setting the thickness to 20 um or more, and, it is possible to reduce the amount of the resin used and reduce the cost by setting the thickness to 80 um or less.

Note that the sealant layer 53 may be a single layer or multiple layers. In the case of multiple layers, a three-layer film in which a random polypropylene film is laminated on both surfaces of a block polypropylene film can be exemplified.

Examples of the second adhesive layer (non-colored adhesive layer) 62 include an adhesive layer made of a polyurethane-based adhesive, an acryl-based adhesive, an epoxy-based adhesive, a polyolefin-based adhesive, an elastomer-based adhesive, a fluorine-based adhesive, an acid-modified polypropylene adhesive, and the like.

Among them, the acrylic-based adhesive and the polyolefin-based adhesive are preferably used. In this case, the electrolyte resistance and the water vapor barrier property of the exterior material 1 can be improved.

The method of bonding the metal foil layer 52 and the sealant layer 53 is not limited, but as in the method of bonding the metal foil layer 52 and the substrate layer 51, a dry lamination method in which an adhesive constituting the second adhesive layer 62 is applied and dried and then bonded can be exemplified.

The matte coat layer 50 is laminated on the outer surface of the substrate layer 51 and is a layer for improving moldability by imparting good slipperiness to the surface of the packaging material 1.

The matte coat layer 50 contains a binder resin and solid fine particles (wax, resin beads, and inorganic fine particles). The matte coat layer 50 is preferably configured as follows. An average particle diameter of the wax is 5 um to 20 um. An average particle diameter of the resin beads is 1 um to 10 um. An average particle diameter of the inorganic fine particles is 1 um to 10 um. The solid fine particles each contains 1 mass% to 20 mass%. The total content rate of the solid fine particles, such as, e.g., wax, resin beads, and inorganic fine particles, contained in the matte coat layer, is 30 mass% or more and 50 mass% or less.

The binder resin is preferably made of a main agent polyol and curing agent multifunctional isocyanate. Examples of the binder resin include at least one type selected from an acrylic polyol resin, a urethane polyol resin, a polyolefin polyol resin, a polyester polyol resin, a phenoxy-based resin, a copolymer of a tetrafluoroolefin and a carboxylic acid vinyleter, and a copolymer of a tetrafluoroolefin and an alkyl vinyl ether.

As the binder resin, a tetrafluoroethylene-based fluorine-based resin is preferably used in view of excellent heat resistance and chemical resistance.

Examples of the wax include at least one selected from polyethylene wax, polypropylene wax, and polytetrafluoroethylene wax.

As the wax, a wax having an average particle diameter of 5 um to 20 um is preferably used, and a wax having an average particle diameter of 6 um to 18 um is more preferably used. The content of the wax is preferably set to 1 mass% to 10 mass%, more preferably 2 mass% to 8 mass%.

Examples of the resin beads include at least one selected from acrylic resin beads, urethane resin beads, polyethylene resin beads, polystyrene resin beads, silicone resin beads, and fluoropolymer beads. As the resin beads, resin beads having an average particle diameter of 1 um to 10 um is preferably used. More preferably, resin beads having an average particle diameter of 2 um to 8 um are used. Further, the content of resin beads may be set to 1 mass% to 20 mass%, more preferably to 3 mass% to 17 mass%.

Examples of the inorganic fine particles include at least one selected from silica, alumina, kaoline, calcium oxide, calcium carbonate, calcium sulfate, barium sulfate, and calcium silicate. As the inorganic fine particles, it is preferable to use inorganic fine particles having an average particle diameter of 1 um to 10 µm, more preferably 1 um to 5 um. Further, the content of the inorganic fine particles is preferably set to 20 mass% to 40 mass%, more preferably to 25 mass% to 35 mass%.

The matte coat layer 50 is formed by applying matte coat compositions containing solid fine particles and a heat-resistant resin to the surface of the substrate layer 51 and curing them.

In the matte coat layer 50, the thickness is preferably set to 0.5 um to 5 µm, more preferably 1 um to 3 um. When the matte coat layer 50 is too thin, slipperiness improvement is less effective, and when it is too thick, the cost increases, which is not preferable.

The gross value of the surface of the matte coat layer 50 is preferably set to 1% to 15% at a 60° reflection angle measurement value based on JIS Z8741. This gross value can be obtained by performing measurement at an incident angle of 60° using a gloss measuring instrument "micro-TRI-gloss-s" manufactured by BYK Corporation.

The timing of the step of forming the matte coat layer 50 is not limited, but the step is preferably performed following the step of bonding the substrate layer 51 to the metal foil layer 52 via the first adhesive layer 61. Note that the matte coat layer 50 may be formed by bonding a non-stretched polypropylene (CPP) film to the substrate layer 51.

Note that in the above-described embodiment, the sealing packaging material of the present invention has been described by way of example in which it is used as a packaging material for a power storage device, such as, e.g., a battery, but the present invention is not limited thereto. The packaging material of the present invention can also be used as a packaging material for sealing contents, such as, e.g., foods and pharmaceutical products.

Further, in the above-described embodiment, a case in which a sheet-like packaging material 1 is used as the cover member 3. However, the present invention is not limited thereto. In the present invention, the cover member 3 may be subjected to molding processing. For example, the cover member may be formed in a molded article having a hat-shaped cross-section in which the central portion is recessed (bulged) upward, and the outer peripheral edge portion may be integrally joined to the outer peripheral edge portion of the tray member in a state in which the hat-shaped cover member covers the tray member as described above from above. Further, in the present invention, a casing may be formed by superimposing two sheets-like packaging materials 1 that are not molded to sandwich a power storage device main body therebetween, and thermally fusing the outer peripheral edge portions.

Further, in the above-described embodiment, a case has been described in which a casing is formed using two packaging materials (outer packaging laminate materials), but the present invention is not limited thereto. In the present invention, the number of packaging materials forming the casing is not limited and may be one or three or more.

Needless to say, in the packaging material of the present invention, the matte coat layer 50, the chemical conversion coating layers 63, etc., need not necessarily be provided as preferred requirements.

### [EXAMPLES]

Next, Examples including the gist of the present invention and Comparative Examples for deriving the effects will be described. Needless to say, the present invention is not limited to the following examples.

In the following Examples 1 to 8 and Comparative Examples 1 to 5, packaging materials having the laminated structure shown in FIG. 3 were prepared. As shown in Table 1, in Examples and Comparative Examples, the configurations of the polyamide film as a substrate layer and the first adhesive layer (coloring adhesive layer) differ, and the remaining configurations are the same.

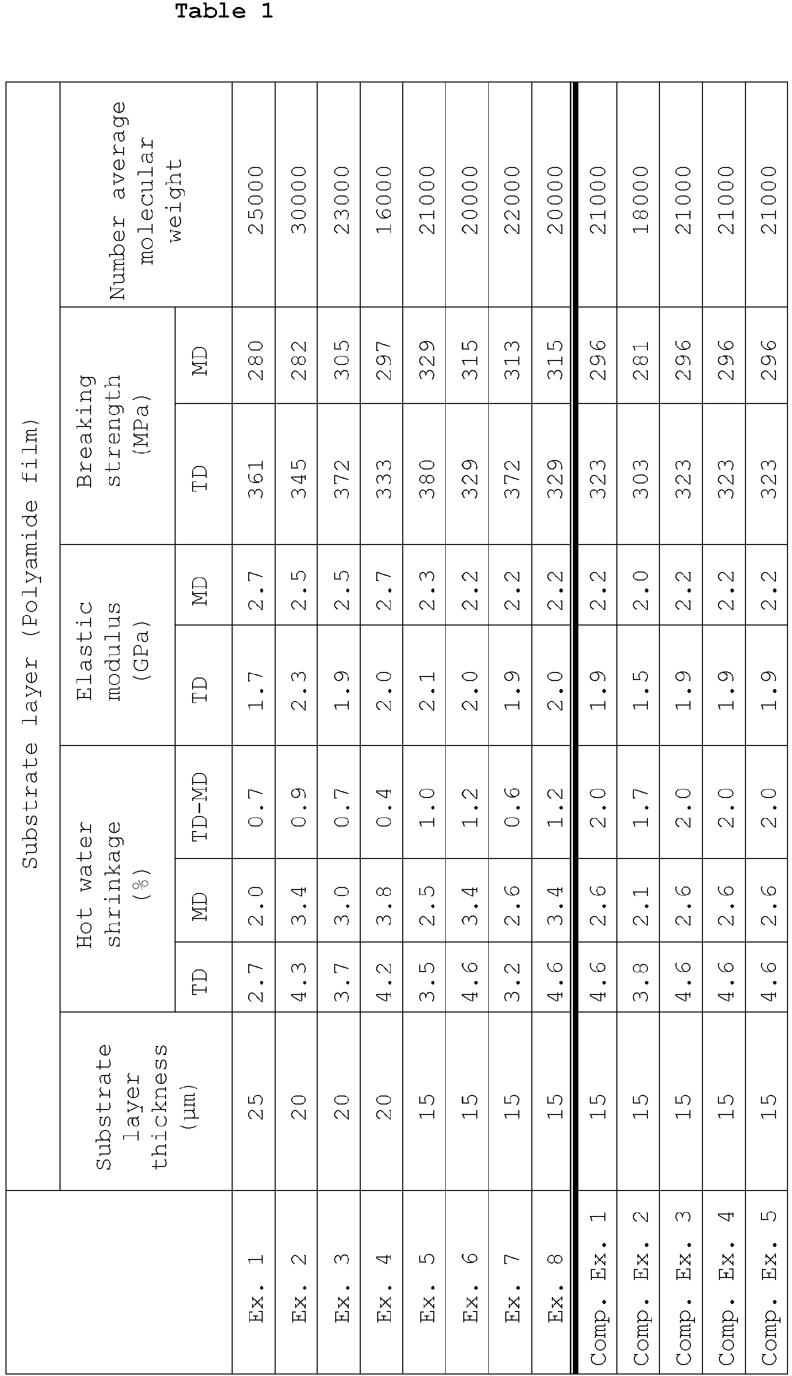

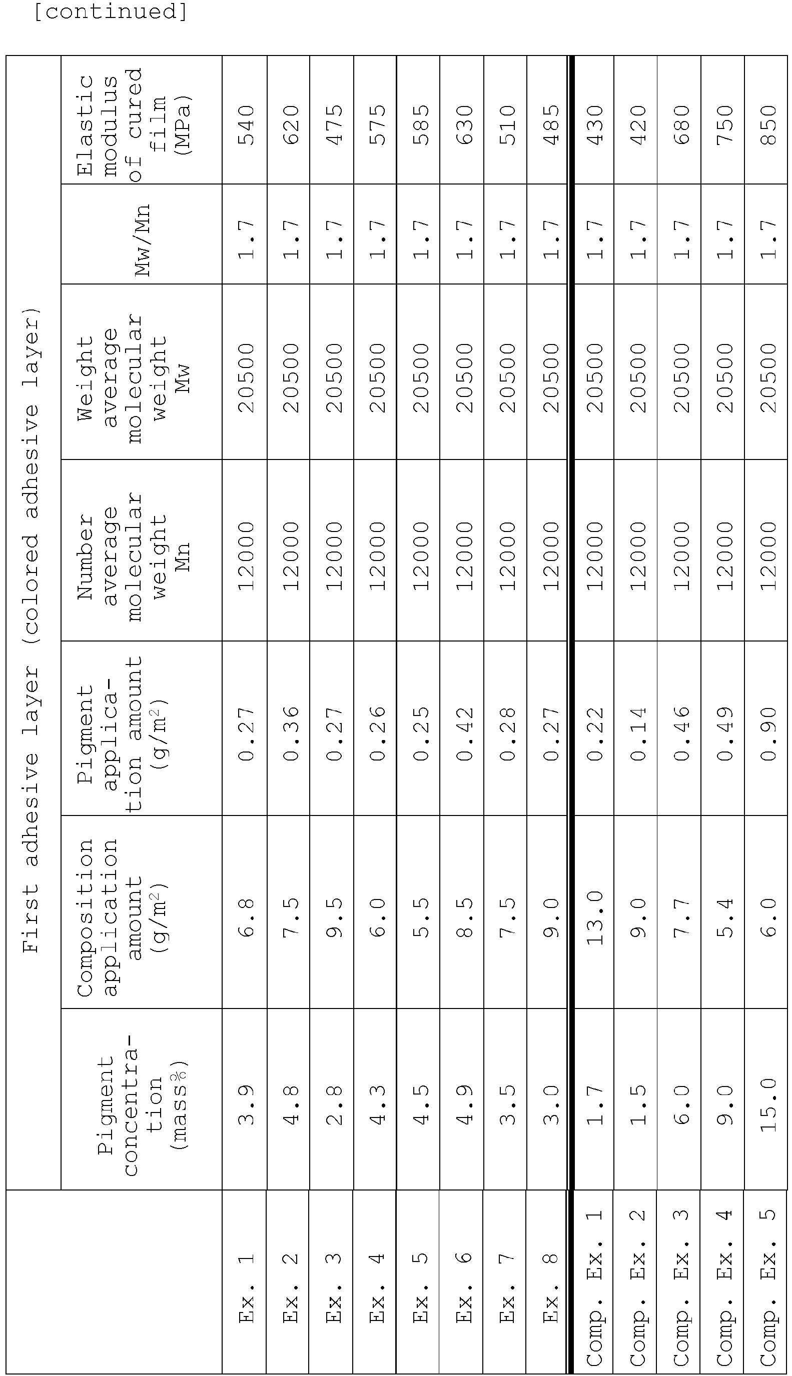

<Example 1> As a metal foil layer, an aluminum foil made of JIS H4160 A8079 having a thickness of 35 um was prepared. Further, on both surfaces of the aluminum foil, a chemical conversion treatment solution composed of polyacrylic acid, trivalent chromic compound, water, and alcohol was applied and then dried at 150°C to form a chemical conversion coating film. The chromium adhesion amount by this chemical conversion coating film was 10 mg/m².

As a substrate layer, a biaxially stretched nylon film having a thickness of 25 um was prepared. The surface (lower surface) of this film to be bonded to the first adhesive layer was subjected to a corona treatment.

In the biaxially stretched nylon film as a substrate layer, the TD hot water shrinkage was 2.7%, the MD hot water shrinkage was 2.0%, the hot water shrinkage difference (TD-MD) between TD and MD was 0.7%, the TD elastic modulus was 1.7 GPa, the MD elastic modulus was 2.7 GPa, the TD breaking strength was 361 MPa, the MD breaking strength was 280 MPa, and the number average molecular weight of the polyamide was 25,000.

The colored adhesive composition constituting the first adhesive layer was prepared in the following manner using a two-part curing type polyester urethane resin as an adhesive component and carbon black as a color pigment.

First, a polyester resin (polyester polyol) which is a main agent of the two-part curing type polyester urethane resin was produced. This main agent was obtained as follows. That is, 30 parts by mole of neopentyl glycol, 30 parts by mole of ethylene glycol, and 40 part by mole of 1,6-hexanediol were melted at 80° C. Then, while stirring, 30 parts by mole of adipic acid (methylene number is 4) as aliphatic dicarboxylic acid and 70 parts by mole of isophthalic acid as aromatic dicarboxylic acid were subjected to condensation polymerization reaction at 210°C for 20 hours to obtain polyester polyol. In this polyester polyol, the number average molecular weight (Mn) was 12,000, the weight average molecular weight (Mw) was 20,500, the ratio (Mw/Mn) thereof was 1.7. Further, 60 parts by mass of ethylacetate was added to 40 parts by mass of a polyester polyol to prepare a fluid polyester polyol resinous solution. Further, the hydroxyl value was 2.2 mgKOH/g (solution value).

Next, a required amount of a carbon black having an average particle diameter of 1.0 um was blended into 100 parts by mass of the polyester polyol resin solution and 64.4 parts by mass of the ethyl acetate described above, and a carbon black pigment was dispersed using a pigment disperser to obtain a main agent containing color pigment. Then, 7.1 parts by mass of an adduct (NCO%: 13.0%, solid content: 75%) of tolylene diisocyanate (TDI) (aromatic type), which is an aromatic isocyanate compound, and trimethylolpropane was blended as a curing agent with 100 parts by mass of the above-described colored pigment-containing main agent, 34.1 parts by mass of ethyl acetate was further blended, and the mixture was sufficiently stirred to obtain a colored adhesive composition. In this colored adhesive composition, the molar ratio (-NCO)/(-OH) of the isocyanate functional group (-NCO) and the polyester polyol hydroxyl group (-OH) was 10. As shown in Table 1, the content of the pigment in this colored adhesive composition was 3.9 mass%.

A cured film of the above-described two-part curing type polyester urethane resin adhesive, i.e., a cured film of a composition excluding a color pigment from the composition of the first adhesive layer was prepared to evaluate the physical properties. Specifically, the two-part curing type polyester urethane resin adhesive was applied to a untreated PP films of non-bonding properties such that the thickness after drying became 50 um, and after drying of a solvent, the film was aged at 60°C until the residual isocyanate became 5% or less for curing. The cured film was peeled from the untreated PP film and cut into 15 mm widths to obtain a test piece.

The prepared test piece was subjected to a tensile test under the conditions of a gauge length of 50 mm and a tensile speed of 100 mm/min to measure the Young' modulus, the breaking strength, and the breaking elongation. As a result, the Young' modulus was 400 MPa, the breaking strength was 30 MPa, and the breaking elongation was 18%. Further, when the S-S curve in the tensile test was obtained, the pattern was the pattern A shown in FIG. 5.

Further, a cured film (colored adhesive cured film) of a colored adhesive composition was prepared to evaluate physical properties. Specifically, a colored adhesive composition was applied to an untreated PP films of non-bonding properties such that the thickness after drying was 50 µm, and after drying the solvent, aging was performed at 60°C until the residual isocyanate became 5% or less to be cured. The cured film was peeled from the untreated PP films and cut into 15 mm widths to obtain test pieces.

The prepared test piece was subjected to a tensile test under the conditions of a gauge length of 50 mm and a tensile speed of 100 mm/min to measure the Young's modulus, the breaking strength, and the breaking elongation. As a result, the Young's modulus was 540 MPa, the breaking strength was 33 MPa, and the breaking elongation was 41%.

On the other hand, a polyacrylic adhesive was prepared as a second adhesive layer, and an unstretched polypropylene film having a thickness of 30 um was prepared as a sealant layer.

Further, as a matte coat layer, a composition for a matte coat layer was prepared by mixing 70 parts by mass of fluoroethylene vinyl ester as a heat-resistant resin, 10 parts by mass of barium sulfate as inorganic fine particles, 10 parts by mass of powdery silica, 5 parts by mass of polytetrafluoroethylene wax as wax, and 5 parts by mass of polyethylene resin beads as resin beads.

A first adhesive layer was formed by applying a predetermined amount of the above-described colored adhesive composition to one surface (outer surface) of the above-described aluminum foil for a metal foil layer on which a chemical conversion coating was formed on both surfaces and drying it. The coating amount of the colored adhesive composition, the number average molecular weight Mn, the weight average molecular weight Mw, Mw/Mn, and the content (coating amount) of the carbon black were as shown in Table 1. The substrate layer film was bonded on the first adhesive layer to laminate the substrate layer.

Then, the polyacrylic adhesive as the second adhesive layer was applied to the other surface (lower surface) of the metal foil layer, and the polypropylene film as a sealant layer was bonded to the outer surface thereof.

Further, the matte coat layer composition was applied to the outer surface of the substrate layer such that the thickness after drying became 2 µm.

The laminate bonded as described above was allowed to be aged at 40°C for 5 days to obtain an exterior material (a power storage device packaging material) of Example 1.

<Example 2 to 8 and Comparative Examples 1 to 5> Packaging materials of Examples 2 to 8 and Comparative Examples 1 to 5 were obtained in the same manner as in Example 1 except that the thickness, the hot water shrinkage, the elastic modulus, the breaking strength, and the number-average molecular weight of the substrate layer were adjusted in the substrate layer as shown in Tables 1 and 2, and the pigment concentration (carbon black concentration), the colored adhesive composition coating amount, the pigment coating amount (content), the number-average molecular weight Mn, weight average molecular weight Mw, and Mw/Mn in the first adhesive layer were adjusted.

However, in the packaging material sample of Example 6, an easy adhesion treatment agent layer (0.2 g/m2) made of a urethane resin was provided on the corona-treated surface of the polyamide film (substrate layer).

### <Evaluation Test >

### (1) Evaluation of Concealability (Shielding Property)

The packaging materials of Examples and Comparative Examples were each visually observed from the substrate layer side (outer surface side) to confirm the concealability of the metal foil layer. Then, those having a shielding property was evaluated as "○" , and those having no shielding property was evaluated as "×". Evaluation results thus obtained are evaluated in Table 2.

**Table 2**

| | | | | | | |
|---|---|---|---|---|---|---|
| | Shielding property | Moldability | Piercing strength (N) | Presence or absence of peeling | | Moldability |
| | | | | High-temperature high-humid test | Hot water submerse test | |
| Ex. 1 | ○ | ⊚ | 29.2 | ⊚ | ⊚ | ○ |
| Ex. 2 | ○ | ⊚ | 27.1 | ⊚ | ○ | ○ |
| Ex. 3 | ○ | ⊚ | 26.3 | ⊚ | ⊚ | ○ |
| Ex. 4 | ○ | ⊚ | 25.9 | ⊚ | ⊚ | ○ |
| Ex. 5 | ○ | ⊚ | 25.1 | ⊚ | ⊚ | ○ |
| Ex. 6 | ○ | ⊚ | 24.3 | ⊚ | ○ | ○ |
| Ex. 7 | ○ | ⊚ | 25.6 | ⊚ | ⊚ | ○ |
| Ex. 8 | ○ | ⊚ | 24.3 | ⊚ | ⊚ | ○ |
| Comp. Ex. 1 | × | × | 21.3 | ⊚ | ⊚ | × |
| Comp. Ex. 2 | × | × | 18.2 | ⊚ | ⊚ | ○ |
| Comp. Ex. 3 | ○ | × | 20.6 | ○ | × | ○ |
| Comp. Ex. 4 | ○ | × | 20.6 | △ | × | ○ |
| Comp. Ex. 5 | ○ | × | 20.6 | × | × | ○ |

### (2) Evaluation of Formability

A press machine manufactured by Amada Co., Ltd. was prepared in which a mold having a punch shape of 33 mm × 54 mm, a punch corner R of 2 mm, A punch shoulder R of 1. 3 mm, and a die shoulder R of 1 mm of a die shape was prepared.

Each of the packaging materials of Examples and Comparative Examples was then sampled into a blank shape of 100 mm × 125 mm. Then, a molded article sample was prepared by performing deep drawing on each sample using a press machine.

The presence or absence of pinholes and cracks in the corner portion of each molded article obtained by this deep drawing was confirmed, and the "maximum molding depth (mm)" at which pinholes and cracks did not occur was investigated and evaluated based on the following criteria. The presence or absence of cracks or pinholes in the evaluation was examined by a light transmittance method in a dark room. Among "⊚," "○," and "×" of the evaluation criteria described below, "⊚" and "○" denote "Pass," and "×" denotes "Fail." The results are shown in Table 2.
⊚: There was no crack or pin hole at the forming depth of 6 mm or more
O: There was no crack or pin hole at the forming depth of 5 mm and more and less than 6 mm
×: There were cracks or pin holes at the forming depth of less than 5 mm

### (3) Evaluation on Peeling of Substrate Layer

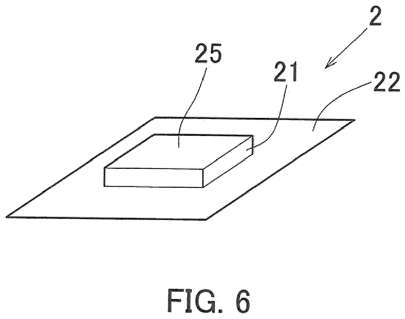

The packaging materials of Examples and Comparative Examples were each sampled to a predetermined size and subjected to deep drawing in the same manner as described above to prepare a molded article of shaped case (upside-down shaped tray member) 2 as a molded article having a recessed portion (protrusion) 21 of 33 mm × 54 mm × 4.5 mm as shown in FIG. 6 and a flat flange portion 22 on the outer periphery of the protrusion. Further, the top wall (top surface) 25 of the protrusion of the molded article 2 was concavely deformed to be crushed, and then subjected to the following high-temperature high-humidity test and hot water submersion test, and the presence or absence of peeling of the substrate layer after the test was visually observed.

In the high-temperature high-humidity test, the molded article 2 having the top surface 25 crushed was stored in an atmosphere of 70°C and 90%Rh moisture for two weeks, and the presence or absence of peeling of the substrate layer was confirmed. Further, in the hot water submersion test, the crushed molded article 2 was submerged in hot water at 45°C and stored for two weeks.

For both the tests, 30 pieces of the molded articles 2 were visually observed for each Example and each Comparative Example, and evaluated on the basis of the numbers of the molded articles 2 in which the substrate layer was peeled from the metal foil layer by the following criteria. Among "⊚," "○, "△," and "×" in the following evaluation criteria, "⊚," "○," and "△" denote "Passed," and "×" denotes "Failed." The results are shown in Table 2.
⊚: There was 0 piece in which the substrate layer was peeled from the metal foil layer out of 30 pieces.
O: There were 1 or 2 pieces in which the substrate layer was peeled from the metal foil layer out of 30 pieces.
△: There were 3 to 5 pieces in which the substrate layer was peeled from the metal foil layer out of 30 pieces.
×: There were 6 to 30 piece in which the substrate layer was peeled from the metal foil layer out of 30 pieces.

### (4) Evaluating formability

In preparing each of the packaging materials of Example and Comparative Examples, the drying time after applying the first adhesive layer (colored adhesive composition) was measured. At this time, the drying time of Example 5 was used as a reference time, and those whose drying time is 15% or more slower than the reference time were evaluated as "×":
Failed", and those other than the above were evaluated as "O: "Passed". The results are shown in Table 2.

### (5) Measurement of Piercing Strength (Evaluation of Puncture Resistance)

The piercing strength (puncture strength) was measured according to JIS (Japanese Industrial Standard) Z1707: 2019. The piercing strength test was measured by the following procedures (5-1) to (5-3).

(5-1) The test piece obtained from the packaging material of each of Examples and Comparative Examples was fixed with a jig. Then, a semi-circular needle having a diameter 1.0 mm and a tip-shape radial of 0.5 mm was pierced at a test velocity 5015 mm/min, and the maximal force (N) until the needle penetrates was measured.

(5-2) The number of the test piece was 5 or more in each Example and each Comparative Example and was averaged over the entire width of the test piece.

(5-3) In a case where the test result depends on whether it penetrates from either side of the film, they are performed on each side. The reported value was one decimal place.

### <Overall Evaluation>

As can be seen from the above evaluation results, the packaging materials of Example related to the present invention were excellent in the shielding property, the formability, the peel resistance, the formability and the piercing resistance. In contrast, the packaging materials of Comparative Examples, which deviated from the gist of the present invention, were inferior to either evaluation as compared with the packaging materials of Examples.

### [INDUSTRIAL APPLICABILITY]

The packaging material of the present invention can be suitably used as a packaging material for a battery (power storage device), such as, e.g., secondary battery (a lithium-ion secondary battery), for a notebook computer, a mobile telephone, a vehicle-mounted (mobile) or a stationary secondary battery.

### [DESCRIPTION OF SYMBOLS]

- 1:: Packaging material (external material)
- 10:: Power storage device main body
- 11:: Casing
- 2:: Tray member (packaging material, external material, packaging container)
- 3:: Cover member (packaging material, external material)
- 51:: Substrate layer
- 52:: Metal foil layer
- 53:: Sealant layer
- 61:: First adhesive layer (colored adhesive layer)
- 63:: Chemical conversion coating
- MD:: Machine direction
- TD:: Transverse direction

## Claims

1. A packaging material comprising:
a substrate layer made of a heat-resistant resin;
a metal foil layer laminated on an inner side of the substrate layer;
a sealant layer made of a thermoplastic resin, the sealant layer being laminated on an inner side of the metal foil layer; and
a colored adhesive layer provided between the metal foil layer and the substrate layer,
wherein the colored adhesive layer contains a color pigment,
wherein the substrate layer is 2.0% to 5.0% both in hot water shrinkage in a machine direction (MD) and in hot water shrinkage in a transverse direction (TD) perpendicular to the machine direction,
wherein the substrate layer is 1.5% or less in a difference between the hot water shrinkage in the machine direction (MD) and the hot water shrinkage in the transverse direction (TD),
wherein the substrate layer is 1.5 GPa to 3 GPa both in an elastic modulus in the machine direction (MD) and in an elastic modulus in the transverse direction (TD), and
wherein the substrate layer is 320 MPa or more in at least one of breaking strength in the machine direction (MD) and breaking strength in the transverse direction (TD).

2. The packaging material as recited in claim 1,
wherein the colored adhesive layer is made of a colored adhesive composition containing the color pigment and an adhesive,
wherein the colored adhesive composition contains the color pigment of 2 mass% or more and less than 5 mass% with respect to a solid component, and
wherein the colored adhesive layer is a coating made of the colored adhesive composition of 5 g/m² to 10 g/m².

3. The packaging material as recited in claim 1 or 2,
wherein the colored adhesive layer contains a two-part curing type polyester urethane resin composed of a polyester resin as a main agent and a polyfunctional isocyanate compound as a curing agent,
wherein the polyester resin as the main agent is 8,000 to 25,000 in a number average molecular weight (Mn), 15,000 to 50,000 in a weight average molecular weight (Mw), and 1.3 to 2.5 in a ratio (Mw/Mn) thereof,
wherein the polyfunctional isocyanate compound as the curing agent contains 50 mole% or more of aromatic isocyanate, and
wherein the substrate layer is configured by a polyamide film having a number average molecular weight of 15,000 to 30,000.

4. The packaging material as recited in claim 3,
wherein in the two-part curing type polyester urethane resin, the polyester resin as the main agent is made of dicarboxylic acid and dialcohol as raw materials, and
wherein the dicarboxylic acid contains aliphatic dicarboxylic acid and aromatic dicarboxylic acid having an even methylene chain number, and a content rate of the aromatic dicarboxylic acid to a total amount thereof is 40 mole% to 80 mole%.

5. The packaging material as recited in claim 3,
wherein a cured film of the two-part curing type polyester urethane resin is 70 MPa to 400 MPa in a Young's modulus by a tensile test according to JIS K7162.

6. The packaging material as recited in claim 1 or 2,
wherein the metal foil layer has a chemical conversion coating film on at least one surface thereof.

7. The packaging material as recited in claim 1 or 2, further comprising:
a matte coat layer provided on an outer surface of the substrate layer.

8. A packaging container provided with a molded portion formed by deep-drawing or stretch-forming the packaging material as recited in claim 1 or 2.

9. A power storage device packaging material constituted by the packaging material as recited in claim 1 and the packaging container as recited in claim 8.

10. A power storage device comprising:
a power storage device main body; and
the packaging material as recited in claim 9,
wherein the power storage device main body is packaged with the packaging material.

11. A power storage device comprising:
a power storage device main body; and
the power storage device packaging material constituted by the packaging material as recited in claim 1 or 2,
wherein the power storage device main body is packaged with the packaging material.

12. A power storage device comprising:
a power storage device main body; and
the power storage device packaging material constituted by the packaging container as recited in claim 8,
wherein the power storage device main body is packaged with the packaging material.
